Europäisches Patentamt

European Patent Office

Office européen des brevets

(11) Veröffentlichungsnummer: **0 362 544**
**A2**

## (12) EUROPÄISCHE PATENTANMELDUNG

(21) Anmeldenummer: 89115771.1

(22) Anmeldetag: 26.08.89

(51) Int. Cl.⁵· **B29C 59/02 , A46D 1/00**

(30) Priorität: 01.10.88 DE 3833428

(43) Veröffentlichungstag der Anmeldung:
**11.04.90 Patentblatt 90/15**

(84) Benannte Vertragsstaaten:
**AT BE CH DE ES FR GB GR IT LI LU NL SE**

(71) Anmelder: **Blendax GmbH**
**Rheinallee 88**
**D-6500 Mainz 1(DE)**

(72) Erfinder: **Klinger, Hans, Prof. Dr.**
**Bachgärten**
**D-8702 Rossbrunn(DE)**
Erfinder: **Wiedemann, Wolfgang, Prof. Dr.**
**Am Ziegelbaum 51**
**D-8706 Höchberg(DE)**
Erfinder: **Klein, Horst**
**Schwarzwaldstrasse 6**
**D-6233 Kelkheim-Fischbach(DE)**

(54) Verfahren zur Herstellung von zur Besteckung von Zahnbürsten geeigneten synthetischen Borstenmaterialien, Fasern zur Besteckung von Zahnbürsten und mit solchen Fasern ausgestattete Zahnbürsten.

(57) Die vorliegende Erfindung betrifft ein Verfahren zur Herstellung von für die Besteckung von Zahnbürsten geeigneten Borstenmaterialien auf Basis synthetischer Fasern, die auf ihrer Oberfläche durch mechanische Einwirkung, insbesondere mittels eines Strahlgebläses, aufgerauht worden sind, wobei die Aufrauhung am Endlosfaserstrang nach dem Recken erfolgt. Mit diesen Borstenmaterialien lassen sich Zahnbürsten mit verbesserter zahnbelagsentfernender Wirkung herstellen.

EP 0 362 544 A2

## Verfahren zur Herstellung von zur Besteckung von Zahnbürsten geeigneten synthetischen Borstenmaterialien, Fasern zur Besteckung von Zahnbürsten und mit solchen Fasern ausgestattete Zahnbürsten

Die vorliegende Erfindung betrifft ein Verfahren zur Herstellung von zur Besteckung von Zahnbürsten geeigneten synthetischen Borstenmaterialien, entsprechend bearbeitete Fasern zur Besteckung von Zahnbürsten, und mit solchermaßen bearbeiteten Fasern ausgestattete Zahnbürsten.

Zur Reinigung der Zähne und Erhaltung der Mundhygiene ist die Verwendung manueller oder elektrisch betätigter Zahnbürsten allgemein geläufig. Die Reinigung erfolgt dabei durch die einzelnen Borsten an der Zahnoberfläche und die in der Zahnpasta befindlichen Abrasivkörper. Für die Leistungsfähigkeit und den Wirkungsgrad einer Zahnbürste ist es entscheidend, wie rasch und gründlich die habituell unsauberen Zonen, d.h. Zahnzwischenräume, Fissuren und Zahnhälse, von Speiserückständen und insbesondere Zahnbelag, der die Ursache für die Entstehung von Karies und Zahnfleischentzündungen ist, befreit werden.

Zur Verbesserung der zahnbelagsentfernenden Wirkung einer Zahnbürste wurde bereits vorgeschlagen, die einzelnen Borsten an ihrer Oberfläche aufzurauhen (CH-A 195,287). Dadurch wird eine intensivere und in der üblicherweise für Zähneputzen aufgewendeten Zeit vollständigere Reinigung der Zähne möglich.

Gemäß den Angaben in der genannten CH-A erfolgt das Anrauhen der dort beschriebenen "Tierborsten", die an sich ohnehin eine unregelmäßige Oberfläche aufweisen, vorzugsweise durch Einwirkung chemischer Mittel oder "Pressen zwischen scharfkantigen Körpern".
Durch eine solche Verfahrensweise läßt sich in einem kontinuierlichen Verfahren eine gleichmäßige Aufrauhung nicht erzielen.

Die Erfindung geht daher von der Aufgabenstellung aus, derartige Zahnbürsten mit an ihrer Oberfläche aufgerauhten Borsten auf Basis synthetischer Fasermaterialien dahingehend weiterzuentwickeln, daß sie nach einem modernen Herstellungsverfahren rationell herstellbar sind und eine gleichmäßige Aufrauhung der Oberfläche aufweisen.

Die Lösung dieser Aufgabe besteht darin, daß die zur Besteckung von Zahnbürsten bestimmten Fasern in Form eines Endlosstranges aufgerauht werden.
Dieser Bearbeitungsgang erfolgt vorzugsweise unmittelbar nach der Herstellung des Faserstranges.
Dabei treten die aus Kunststoff, vorzugsweise Polyamiden oder Polyestern, bestehenden Fasern in an sich bekannter Weise als Endlosstrang aus der Sprühdüse eines Extruders aus, werden anschließend durch ein Wasserbad geführt und danach auf hintereinander angeordneten Streckwalzen gereckt. Schließlich werden die Endlosfasern dann zu Borstenbündeln zusammengeführt.
Im Anschluß an die Streckwalzenanlage wird nun, zur Durchführung der Aufrauhung, eine weitere Station zwischengeschaltet, in der die Filamente an ihrer Oberfläche mechanisch aufgerauht werden.

Dieses Aufrauhen kann durch die Einwirkung von Strahlengebläsen, mittels Glaskugeln, Schleifkörpern wie beispielsweise Korund und anderen Aluminiumoxiden, Carbiden wie Siliciumcarbid und Borcarbid, Nitriden, Kieselgur und Sand, oder auch durch von in Pasten- oder Suspensionsform vorliegenden Abrasivkörpern erfolgen.
Es ist auch möglich, die Aufrauhung durch direkte mechanische Einwirkung von beispielsweise Schleifscheiben zu erreichen, jedoch wird dem Strahl verfahren der Vorzug gegeben, da dadurch eine schonendere Behandlung möglich ist.
Die auf diese Weise aufgerauhten Endlosfasern werden in an sich bekannter Weise zum Stopfen der Bürstenköpfe auf Länge geschnitten und in diese eingebracht. Dies kann durch die üblichen Verfahren mittels eines Metallankers geschehen; möglich ist jedoch auch das Verschweißen mit zur Aufnahme der Borstenbündel mit Ausnehmungen versehenen Bürstenköpfen, wie es beispielsweise in der DE-A 3,403,341 beschrieben ist.
Gegenstand der Erfindung sind also auch die in einem Endlosstrang aufgerauhten, zur Herstellung von Zahnbürsten vorgesehenen Fasermaterialien und die mit solchen Fasermaterialien ausgestatteten Zahnbürsten, die eine verbesserte Zahnreinigung gewährleisten.

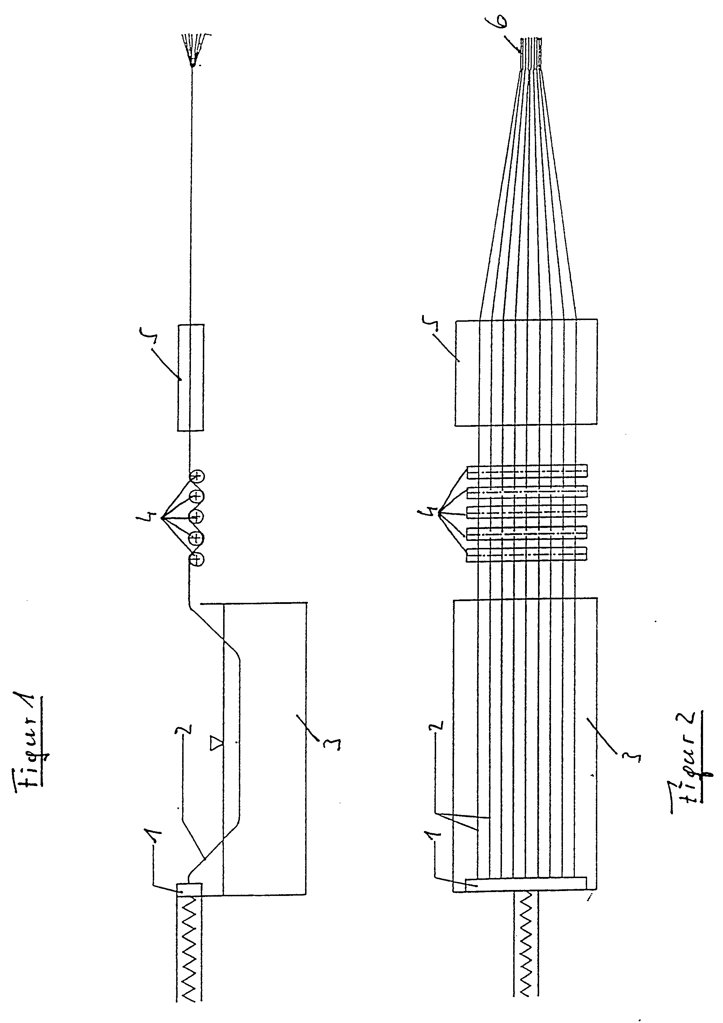

In den Figuren 1 und 2 wird eine schematische Darstellung einer zur Herstellung aufgerauhter Zahnbürstenborsten im Endlosstrang geeigneten Anlage gegeben.
Dabei stellten Figur 1 einen schematischen Querschnitt und Figur 2 eine Draufsicht auf eine solche Anlage dar.

Die Kunststof-Fasern (2) treten aus einer Extruderdüse (1) aus, werden durch ein Wasserbad (3) geführt und anschließend durch Streckwalzen (4) gereckt und im folgenden Arbeitsgang einer Aufrauhung unterworfen. Im gegenständlichen Ausführungsbeispiel geschieht dies durch Behandlung mit einem Sandstrahlgebläse (5), jedoch können, wie bereits ausgeführt, auch andere geeignete Methoden zur Aufrauhung verwendet werden.
Schließlich werden die einzelnen Endlosfaserstränge zu einem Faserbündel (6) zusammengefaßt, um dann der späteren Verarbeitung, d.h. der Besteckung der Bürstenköpfe von Zahnbürsten, zugeführt zu werden.

Bezugsziffernverzeichnis:

1 Extruderdüse
2 Faserstrang
3 Wasserbad
4 Streckwalzen
5 Sandstrahlgebläse
6 Borstenbündel

## Ansprüche

1. Verfahren zur Herstellung von zur Bestekkung von Zahnbürsten geeigneten Borstenmaterialien auf Basis synthetischer Fasern, ausgehend von einem Endlosstrang, der in an sich bekannter Weise durch Verdüsen hergestellt und auf Streckwalzen gereckt wurde, dadurch gekennzeichnet, daß die Oberfläche des Faser-Endlosstranges nach dem Recken mechanisch aufgerauht wird.

2. Verfahren nach Anspruch 1, dadurch gekennzeichnet, daß das Aufrauhen der Faseroberfläche durch ein Strahlgebläse erfolgt.

3. Zur Besteckung von Zahnbürsten geeignetes Fasermaterial, dadurch gekennzeichnet, daß es auf seiner Oberfläche nach einem Verfahren nach Anspruch 1 oder 2 aufgerauht wurde.

4. Zahnbürste, bestehend aus einem Griff und einem Borstenkopf, auf dem eine größere Anzahl Borstenbüschel befestigt ist, dadurch gekennzeichnet, daß die Borsten ganz oder teilweise aus an der Oberfläche aufgerauhtem Fasermaterial nach Anspruch 3 bestehen.

Figur 1

Figur 2